# EUROPEAN PATENT SPECIFICATION

(11) **EP 3 366 418 B1**
(45) Date of publication and mention of the grant of the patent: **06.04.2022**
(21) Application number: 16857105.7
(22) Date of filing: 20.10.2016
(51) Int. Cl.: B24B 9/10, C03C 19/00, B24B 47/22, B24B 41/00

(54) **GLASS PLATE MACHINING APPARATUS**
VORRICHTUNG ZUR BEARBEITUNG VON GLASPLATTEN
APPAREIL D'USINAGE DE PLAQUE DE VERRE

(30) Priority: 23.10.2015 JP 2015209421
(43) Date of publication of application: 29.08.2018
(73) Proprietor: BANDO KIKO CO., LTD., Tokushima 770-0871 (JP)
(72) Inventor: BANDO, Kazuaki, Tokushima-shi Tokushima 770-0871 (JP)
(74) Representative: J A Kemp LLP
(86) International application number: PCT/JP2016/004646
(87) International publication number: WO 2017/068787

(56) References cited:
- WO-A1-2011/121640
- WO-A1-2011/121640
- JP-A- H06 504 236
- JP-A- 2006 110 642
- JP-A- 2012 011 539
- US-A- 5 079 876
- US-A1- 2009 081 930

## Description

### TECHNICAL FIELD

The present invention relates to a glass-plate working apparatus for cutting out glass plates, such as glass plates for window glass plates of automobiles and glass plates for other usage, from unworked glass plates and for effecting grinding of peripheral edges of the cut-out glass plates.

### BACKGROUND ART

The glass-plate working apparatus is known from Patent Documents 1 and 2, which is so arranged that the bend-breaking device and the grinding device are connected via a sucking and transporting device, and glass plates which are continually cut out from the bend-breaking device are consecutively supplied to the grinding device, are continually subjected to grinding of peripheral edges of the glass plates, and are consecutively discharged.

WO2011-121640 which forms the basis of the two-part form of Claim 1, discloses an apparatus for processing a plate glass that comprises one rotary suction device reciprocating between one plate glass entering area and a grinding area, and the other rotary suction device reciprocating between the other plate glass entering area and the grinding area, wherein both rotary suction devices are installed to advance into the grinding area alternately.

### PRIOR ART DOCUMENTS

### PATENT DOCUMENTS

Patent Document 1: JP-B-1994-75819
Patent Document 2: JP-A-1996-231238

### SUMMARY OF THE INVENTION

### PROBLEMS THAT THE INVENTION IS TO SOLVE

In the glass-plate working apparatuses described in Patent Documents 1 and 2, each time the grinding of the glass plate supplied to and held on a worktable corresponding to a grinding head is completed, the grinding head is moved away from the worktable, returns to a standby point, and stops on standby. Upon completion of the carrying out of the glass plate from the worktable and the receiving of a next glass plate on the worktable, the grinding head advances toward the worktable and starts grinding of peripheral edges of the next glass plate. As a result, an interruption of grinding occurs on each occasion of delivery of the glass plate to and from the worktable, so that high productivity is difficult to obtain.

The present invention has been devised in view of the above-described aspects, and its object is to provide a glass-plate working apparatus which makes it possible to obtain high productivity.

### MEANS FOR SOLVING THE PROBLEMS

A glass-plate working apparatus in accordance with the present invention as defined by Claim 1, comprises: a grinding head fixed in a transporting direction of a glass-plate; and two grinding worktables being adapted so as to undergo X-axis movement along the transporting direction independently of each other and undergo angularly controlled rotation independently of each other, said two grinding worktables being adapted to be alternately advanced to a position corresponding to said grinding head, and to undergo planar polar coordinate movement with respect to said grinding head, and said grinding head is adapted to continue the grinding of glass plates on a continual basis as an operation is alternately repeated in which while grinding is being effected by said grinding head through the planar polar coordinate movement of one of said grinding worktables holding the glass plate with respect to said grinding head, another one of said grinding worktables retreats from the position corresponding to said grinding head and effects the carrying out of an already ground glass plate and the receiving of a next glass plate to be newly ground, wherein: either: (a) said grinding head is fixed to a side portion of a glass-plate transporting passage in a grinding section, said two grinding worktables including a table base; a main body unit for subjecting the table base to angularly controlled rotation; a Y-axis moving means for subjecting the main body units to Y-axis movement, and said two grinding worktables being adapted to be alternately advanced to the position corresponding to said grinding head, and to undergo planar polar coordinate movement with respect to said grinding head by its angularly controlled rotation by the main body unit and by the Y-axis movement by the Y-axis moving means, or (b) said grinding head is interposed between the two grinding worktables on forward and backward sides in the transporting direction, said glass-plate working apparatus further comprising an X-axis moving means for subjecting the two grinding worktables to X-axis movement independently of each other, said two grinding worktables including a table base; and a main body unit for subjecting the table base to angularly controlled rotation, and said two grinding worktables being adapted to be alternately advanced to the position corresponding to said grinding head, and to undergo planar polar coordinate movement with respect to said grinding head by its angularly controlled rotation by the main body unit and by the X-axis movement by the X-axis moving means.

### ADVANTAGES OF THE INVENTION

In accordance with the present invention, it is possible to provide a glass-plate working apparatus in which while one worktable is grinding a glass plate by undergoing coordinate movement in cooperation with the grinding head, the other worktable is at a standstill at its point of origin to effect the delivery of the glass plate, and upon completion of the grinding of the glass plate on the one worktable, the other worktable advances toward the grinding head and the grinding head continues to effect grinding, so that the grinding head continues grinding on a continual basis alternately with respect to the glass plates on the two worktables and does not stop grinding, thereby making it possible to obtain high productivity.

In addition, according to the present invention, since the glass plates on the two worktables are ground by one grinding head, the glass plates on the two worktables are free from variations in ground dimensions, so that the finished condition becomes constant.

### BRIEF DESCRIPTION OF THE DRAWINGS

Fig. 1 is a front elevational view of a preferred first embodiment of the present invention;
Fig. 2 is an explanatory rear view of the embodiment shown in Fig. 1;
Fig. 3 is an explanatory cross-sectional view taken in the direction of arrows along line III - III of Fig. 1;
Fig. 4 is an explanatory cross-sectional view taken in the direction of arrows along line IV - IV of Fig. 1;
Fig. 5 is an explanatory front elevational view of a preferred second embodiment of the present invention;
Fig. 6 is an explanatory cross-sectional view taken in the direction of arrows along line VI - VI of Fig. 5; and
Fig. 7 is an explanatory cross-sectional view taken in the direction of arrows along line VII - VII of Fig. 5.

### MODE FOR CARRYING OUT THE INVENTION

Hereafter, a description will be given of a preferred mode for carrying out the invention with reference to the embodiments shown in the drawings. It should be noted that the invention is not limited to these embodiments.

### First Embodiment

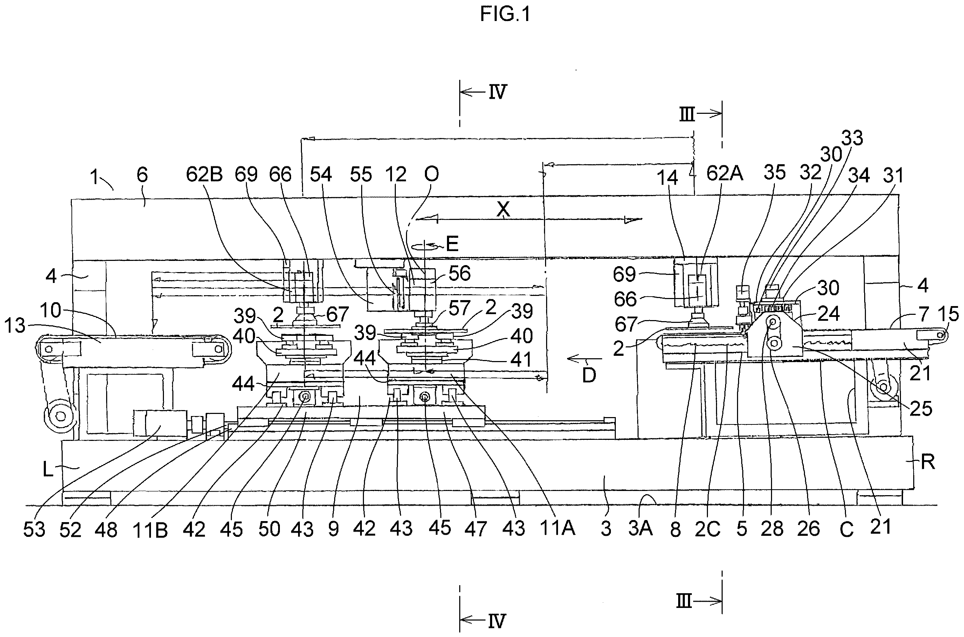

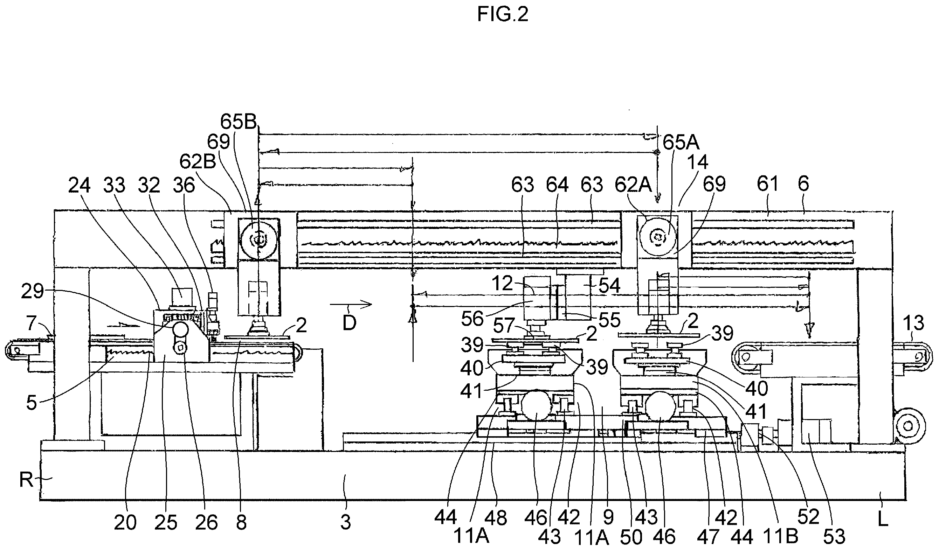

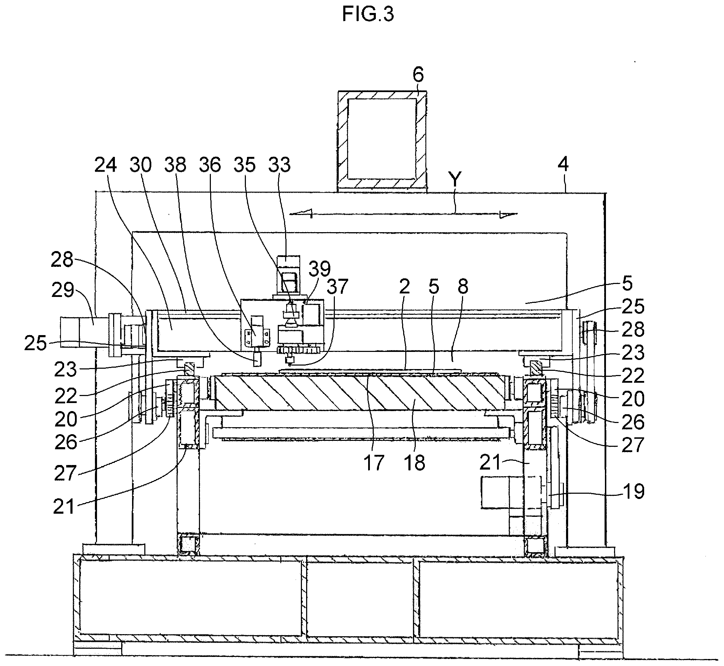

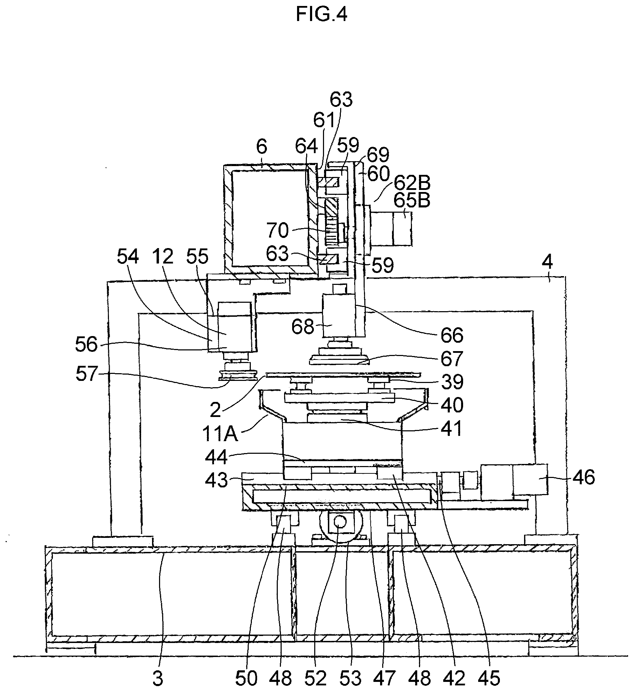

In Figs. 1 to 4, a glass-plate working apparatus 1 in accordance with this embodiment has a base 3 which is installed on a floor surface 3A, a pair of portal frames 4 are erected uprightly at a right end R and a left end L of the base 3, and a mount 6 is bridged between the portal frames 4 in such a manner as to extend linearly in an X-axis direction.

The glass-plate working apparatus 1 includes a feeding section 7, a scribing and bend-breaking section 8, a grinding section 9, and a discharging section 10. The feeding section 7, the scribing and bend-breaking section 8, the grinding section 9, and the discharging section 10 are provided by being arranged from the right end R side toward the left end L side, and the scribing and bend-breaking section 8 is adapted to effect the formation of a scribe line on the glass plate 2 and the bend-breaking and separation of the glass plate 2 along the scribe line in a state in which the glass plate 2 is fixed as it is at the same position.

The feeding section 7 and the scribing and bend-breaking section 8 are provided with a scribing device 5, the grinding section 9 is provided with two grinding worktables 11A and 11B and one grinding head 12, and the discharging section 10 is provided with a discharge conveyor 13.

The scribing device 5, the two grinding worktables 11A and 11B, and the discharge conveyor 13 are arranged in series along the mount 6, i.e., along the X-axis direction, and at necessary intervals. A glass-plate transporting device 14 is provided above the scribing device 5, the two grinding worktables 11A and 11B, and the discharge conveyor 13.

The scribing device 5 includes a belt conveyor table 15 for planarly supporting and transporting the glass plate 2 and positioning and stopping the glass plate 2, as well as a scribe head 35 which moves in an X-Y planar coordinate system in parallel with the upper surface of the belt conveyor table 15.

The belt conveyor table 15, which is installed inside a main body frame 21 along the X-axis direction, includes a wide endless conveyor belt 17, a supporting base 18 for planarly supporting the conveyor belt 17 from the underside, and a glass feeding control motor 19 for causing the conveyor belt 17 to travel under NC control. The feeding section 7 and the scribing and bend-breaking section 8 are disposed with a central region C in the X-axis direction of the upper surface of the conveyor belt 17 interposed therebetween. A pair of guide rails 22 are provided on the main body frame 21 along the X-axis direction on opposite side regions of the belt conveyor table 15, and a slide block 23 is movably held by each guide rail 22. Above the belt conveyor table 15, a traveling frame 24 is installed, at both ends thereof, on the slide blocks 23 by means of a pair of brackets 25 in such a manner as to straddle the belt conveyor table 15.

The traveling frame 24 is supported by the slide blocks 23 on both sides and is adapted to be guided by the guide rails 22 linearly movably in the X-axis direction. On each opposite side of the belt conveyor table 15, a rack 20 is juxtaposed to the guide rails 22 in parallel therewith.

A pinion gear unit 26 having a pinion gear 27 is mounted on each bracket 25, and each pinion gear 27 meshes with each rack 20.

A shaft 28 is assembled to the traveling frame 24 in such a manner as to penetrate both sides thereof, and the shaft 28 is coupled to the pinion gear units 26 on both sides via a pulley and a belt, and is coupled at one side portion thereof to an X-axis servo motor 29.

On the traveling frame 24 which moves in the X-axis direction, i.e., undergoes X-axis movement, by the operation of the X-axis servo motor 29, a pair of guide rails 30 and a rack 31 along the guide rails 30 are juxtaposed along the Y-axis direction perpendicular to the X-axis direction. A T-shaped bracket 32 is mounted on slide blocks held by the guide rails 30 movably in the Y-axis direction, and the T-shaped bracket 32 is linearly movable in the Y-axis direction by being guided by the pair of guide rails 30 via the slide blocks respectively held movably in the Y-axis direction by the pair of guiderails 30.

A pinion gear 34 meshing with the rack 31 is mounted on an output rotating shaft of a Y-axis servo motor 33 mounted on the upper surface of the T-shaped bracket 32,. The T-shaped bracket 32 is adapted to be moved in the Y-axis direction, i.e., undergo Y-axis movement, by the rotation of the pinion gear 34 due to the operation of the Y-axis servo motor 33 and by the meshing of the pinion gear 34 with the rack 31.

The scribe head 35 having a cutter wheel (scribe wheel) 37 and a bend-breaking device 36 having a pushing rod (pusher) 38 are juxtaposed on a front surface of the T-shaped bracket 32. The scribe head 35 and the bend-breaking device 36 are adapted to integrally undergo planar coordinate movement above the upper surface of the belt conveyor table 15, i.e., in this embodiment, movement in the X-axis direction and the Y-axis direction, namely, X-Y planar coordinate movement, by the operation of the X-axis servo motor 29 and the Y-axis servo motor 33.

In the scribing and bend-breaking section 8, the scribe head 35 and the bend-breaking device 36 are made to integrally undergo X-Y planar coordinate movement under NC control based on prestored scribe formation information with respect to the scribe head 35. Through this X-Y planar coordinate movement, first, the scribe head 35 forms scribe lines on the glass plate 2 as its cutter wheel 37 is pressed against the glass plate 2, i.e., an unworked glass plate. After the formation of the scribe lines, the scribe head 35 and the bend-breaking device 36 are made to integrally undergo X-Y planar coordinate movement under NC control based on prestored bend-breaking information with respect to the bend-breaking device 36. Through this X-Y planar coordinate movement, the bend-breaking device 36 is adapted to bend-break and separate along the scribe lines unnecessary regions of the glass plate 2 with the scribe lines formed thereon by consecutive pressing of the glass plate 2 by the pushing rod 38 at a plurality of pressing required positions, thereby producing a glass plate (cut-out glass plate) 2 whose unnecessary regions have been bend-broken and separated. Subsequent to this production, a transport shuttle 62A of the transporting device 14 is returned to above the glass plate (cut-out glass plate) 2 whose unnecessary regions have been bend-broken and separated. In this return, a suction pad 67 of the transport shuttle 62A is lowered to suck and lift the glass plate 2 whose unnecessary regions have been bend-broken and separated, and the transport shuttle 62A is adapted to transport toward the grinding section 9 the glass plate 2 sucked and lifted by this suction pad 67. Meanwhile, the conveyor belt 17 is adapted to discharge the unnecessary regions (cullets) of the glass plate remaining on the conveyor belt 17 to a cullet accommodating box (not shown) provided on the downstream side of the conveyor belt 17, and to travel by the operation of the glass feeding control motor 19 so as to transport a newly supplied glass plate 2 as an unworked glass plate to the scribing and bend-breaking section 8.

The two grinding worktables 11A and 11B are arranged in series with an interval therebetween along a transporting direction D of the glass plate 2, i.e., along the X-axis direction, in the transporting passage of the glass plate 2, and the grinding head 12 is disposed fixedly at a side portion of the transporting passage.

Each of the grinding worktables 11A and 11B includes a plurality of suction cups 39 for sucking and fixing the glass plate 2 horizontally on an upper surface thereof; a table base 40 for sucking and supporting the suction cups 39; a main body unit 41 for rotatably bearing and holding the table base 40 and subjecting the table base 40 to angularly controlled rotation within a plane, i.e., in this embodiment, within a horizontal plane, under NC control; a Y-axis moving means 42 on which the main body unit 41 is mounted and which moves each of the main body units 41 and, hence, each of the table bases 40 independently of each other along the Y-axis; and an X-axis moving means 47 which is common to the two table bases 40, on which both Y-axis moving means 42 are mounted, and which moves both Y-axis moving means 42 and, hence, both table bases 40 integrally along the X-axis.

At the grinding worktables 11A and 11B, the table bases 40 which are linearly reciprocated in their X-axis movement by the X-axis moving means 47 are alternately advanced to a position corresponding to the grinding head 12. The table base 40 which was advanced to the position corresponding to the grinding head 12 is adapted to effect planar polar coordinate movement with respect to the grinding head 12 by its angularly controlled rotation by the main body unit 41 and by its Y-axis movement by the Y-axis moving means 42. Meanwhile, the table base 40 which was not advanced to the position corresponding to the grinding head 12 and was positioned away from the grinding head 12 stops its angularly controlled rotation and Y-axis movement, and is instead subjected to the carrying out of the glass plate 2 which was ground immediately before by the grinding head 12 and held thereon and to the carrying in of a glass plate 2 to be newly ground.

Each of the Y-axis moving means 42 includes two guide rails 43 juxtaposed on an upper surface of a common X-axis moving base 50 along the Y-axis direction; a Y-axis moving base 44 which is installed on slide blocks held on the two guide rails 43 movably in the Y-axis direction and on which the main body unit 41 is mounted; a feed screw 45 connected to the Y-axis moving base 44 by means of a nut and provided rotatably on the X-axis moving base 50 between the two guide rails 43; and a Y-axis control motor 46 having an output rotating shaft coupled to one end of the feed screw 45 and provided on the X-axis moving base 50.

The X-axis moving means 47 includes two guide rails 48 juxtaposed on an upper surface of the base 3 along the X-axis direction; an X-axis moving base 50 which is installed on slide blocks held on these two guide rails 48 movably in the X-axis direction; a feed screw 52 connected to the X-axis moving base 50 by means of a nut and provided rotatably on the upper surface of the base 3 between the two guide rails 48; and an X-axis control motor 53 having an output rotating shaft coupled to one end of the feed screw 52 and provided on the base 3.

The grinding head 12, which is disposed at a position close to the transporting passage of the glass plate 2 and is mounted on the mount 6 by means of a bracket 54, includes a spindle motor 56 which is mounted on the bracket 54 via a vertical position adjusting means 55 and a grinding wheel 57 fitted to an output rotating shaft of the spindle motor 56. The planar polar coordinate movement of the glass plate 2 with respect to the grinding wheel 57 is carried out as the glass plate 2 held on the table base 40 with respect to the grinding wheel 57 is subjected to angularly controlled rotation in a direction E about an axis O of the table base 40 and to Y-axis movement.

The glass-plate transporting device 14 provided on a rear surface 61 of the mount 6 along the X-axis direction has two transporting shuttles 62A and 62B which are adapted to linearly reciprocate in the X-axis direction by being held linearly movably in the X-axis direction via slide blocks 59 fitted movably in the X-axis direction to two guide rails 63 juxtaposed on the rear surface 61 of the mount 6 in such a manner as to range from above the scribing and bend-breaking section 8 of the scribing device 5 to above the discharge conveyor 13. Each of the transporting shuttles 62A and 62B has a movable base 69 mounted on the slide blocks 59, each of traveling servo motors 65A and 65B respectively mounted on the movable base 69, and a glass-plate sucking and lifting device 66 mounted on the respective movable base 69. Each of the traveling servo motors 65A and 65B has an output rotating shaft with a pinion gear 70 fitted thereon, and the pinion gear 70 meshes with a rack 64 juxtaposed to the guide rails 63 therebetween on the rear surface 61.

As the respective traveling servo motors 65A and 65B are independently driven under NC control, the respective two movable bases 69 are made to reciprocatingly travel a necessary distance under NC control in the X-axis direction independently of each other.

One glass-plate sucking and lifting device 66 mounted on the respective movable base 69 has the plurality of suction pads 67 for effecting the sucking of, and the releasing of suction of, the glass plate 2 and a lifting and lowering unit 68 to which the suction pad 67 is fitted and which is mounted on the movable base 69 so as to raise and lower the suction pad 67 in the vertical direction.

In the grinding worktables 11A and 11B, the grinding head 12, and the glass-plate transporting device 14, when a newly cut-out glass plate 2 is produced in the scribing and bend-breaking section 8, first, the transporting shuttle 62A provided with the glass-plate sucking and lifting device 66 which sucked and lifted this cut-out glass plate 2 starts to move forwardly toward the grinding section 9, i.e., in the transporting direction D. At this time, in the grinding section 9, grinding is being performed on the grinding worktable 11A with respect to peripheral edges of the glass plate 2 through the planar polar coordinate movement of the table base 40 with respect to the grinding head 12, while, on the grinding worktable 11B, the ground glass plate 2 is being carried out to the discharge conveyor 13 by the transporting shuttle 62B which returned to a glass-plate access area. In this carrying-out state, the transporting shuttle 62A which sucked the cut-out glass plate 2, while being transferred, passes by the grinding wheel 57 in grinding operation and above the grinding worktable 11A in grinding operation, and reaches above the grinding worktable 11B which completed the carrying out of the glass plate 2. Thereupon, the transporting shuttle 62A lowers the suction pad 67 and releases the suction to thereby carry in and place the cut-out glass plate 2 onto the grinding worktable 11B. After the carrying in and placing on the grinding worktable 11B, the transporting shuttle 62A proceeds to the operation of returning to the scribing and bend-breaking section 8, and the grinding worktable 11B, concurrently sucks and fixes the received cut-out glass plate 2 by its suction cups 39. Upon completion of the grinding operation with respect to the glass plate 2 on the grinding worktable 11A, the grinding worktable 11B undergoes Y-axis movement and advances toward the grinding head 12 to begin the grinding operation with the grinding head 12. The grinding worktable 11A which completed the grinding operation earlier undergoes Y-axis movement and is returned to the glass-plate access area. By this time, the transporting shuttle 62B has already passed by the grinding wheel 79 in grinding operation and above the grinding worktable 11B in grinding operation, and has reached above the grinding worktable 11A to already begin the carrying out of the ground glass plate 2. By this time, the transporting shuttle 62A has sucked a new cut-out glass plate 2 and is transporting it toward the grinding worktable 11A. Thus, the grinding head 12 as it is fixed continues the grinding of the glass plates 2 on a continual basis.

The glass-plate working apparatus 1 of the glass plate 2 in accordance with this embodiment is comprised of the grinding head 12 fixed to a side portion of the transporting passage of the glass plate 2 in the grinding section 9 and the two grinding worktables 11A and 11B which are arranged in series in parallel in the transporting direction D of the glass plate 2 and are adapted to undergo angularly controlled rotation independently of each other, as well as X-axis movement parallel to the transporting direction D of the glass plate and Y-axis movement in a perpendicular direction thereto. The two grinding worktables 11A and 11B are adapted to be alternately advanced to and retreated from the position corresponding to the grinding head 12, and to undergo planar coordinate movement, i.e., in this embodiment, planar polar coordinate movement, with respect to the grinding head 12 to cause the grinding head 12 to effect the grinding of the glass plate 2 in the advance. Thus, the grinding head 12 is adapted to continue the grinding of the glass plates 2 on a continual basis as the operation is alternately repeated in which while, for example, the grinding worktable 11A holding the glass plate 2 is allowing the grinding of the glass plate 2 by the grinding head 12, the grinding worktable 11B retreats from the position corresponding to the grinding head 12 and effects the carrying out of the already ground glass plate 2 and the receiving of the next glass plate 2 to be newly ground. In the glass-plate working apparatus 1 in accordance with this embodiment, since the grinding head 12 continues grinding alternately with respect to the glass plates 2 on the two worktables 11A and 11B and does not stop grinding, it is possible to obtain high productivity.

### Second Embodiment

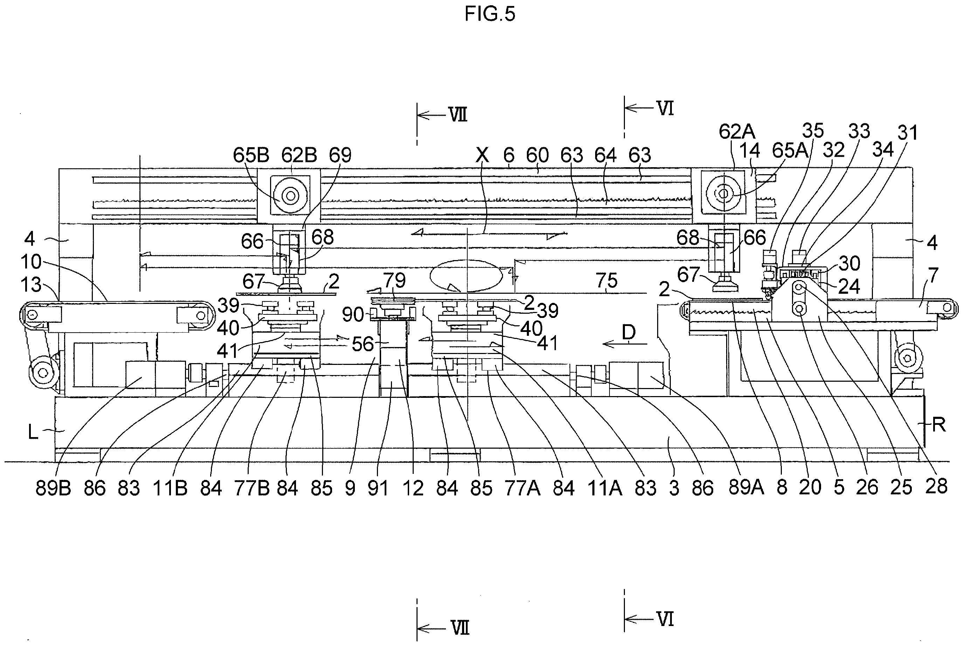

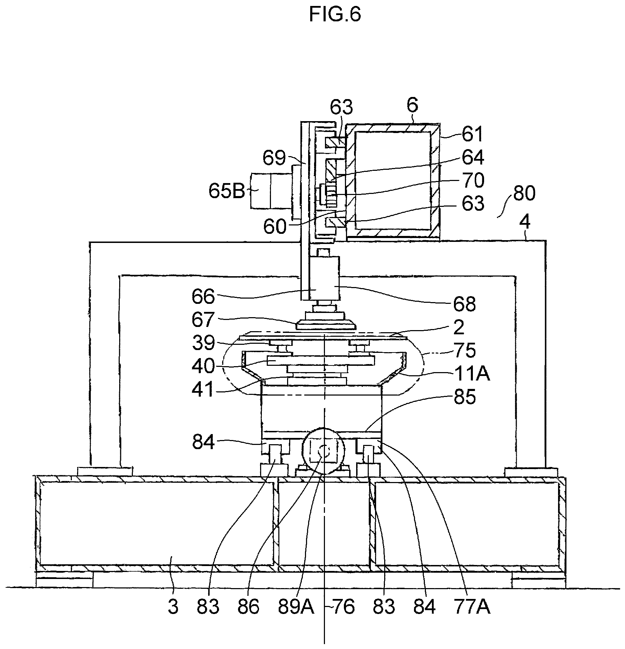

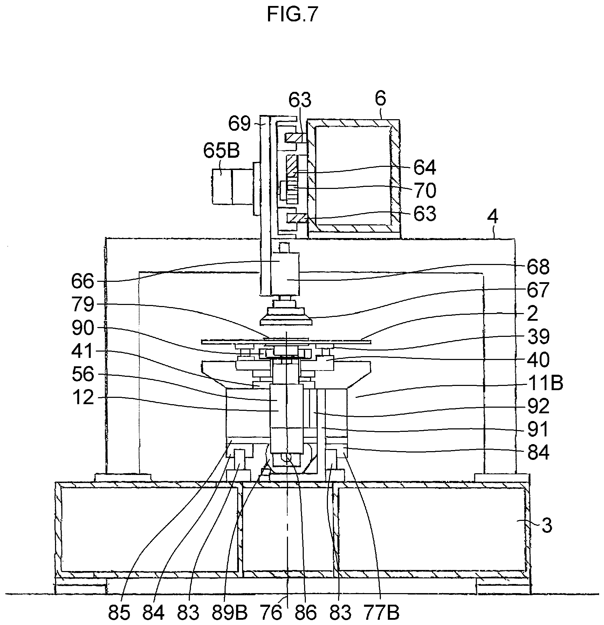

In Figs. 5 to 7, in a glass-plate working apparatus 80 in accordance with a second embodiment of the present invention, the scribing device 5, the glass-plate transporting device 14, and the discharge conveyor 13 are identical in their structure and operation to those of the glass-plate working apparatus 1 in accordance with the first embodiment, except that the glass-plate transporting device 14 is provided on a front surface 60 of the mount 6 instead of the rear surface 61 of the mount 6, so that a description thereof will be omitted. Although the arrangement in which the grinding section 9 includes two grinding worktables 11A and 11B and one grinding head 12 is identical to that of the glass-plate working apparatus 1 in accordance with the first embodiment, the grinding worktables 11A and 11B and the grinding head 12 differ in their arrangement position and operation from those of the glass-plate working apparatus 1 in accordance with the first embodiment.

In the same way as each of the grinding worktables 11A and 11B of the glass-plate working apparatus 1 in accordance with the first embodiment, each of the grinding worktables 11A and 11B includes the plurality of suction cups 39 for sucking and fixing the glass plate 2 horizontally on the upper surface thereof; the table base 40 for sucking and supporting the suction cups 39; and the main body unit 41 for rotatably holding the table base 40 and subjecting the table base 40 to angularly controlled rotation within a horizontal plane under NC control;

The grinding worktables 11A and 11B and the grinding head 12 are arranged in series with an interval therebetween along the transporting direction D below a transporting passage 75 of the glass plate 2 or on a central line 76 below the transporting passage 75. Each of the grinding worktables 11A and 11B are arranged with the fixedly provided grinding head 12 interposed therebetween on forward and backward sides in the transporting direction D and at an interval with the grinding head 12.

The glass-plate working apparatus 80 has X-axis moving means 77A and 77B for alternately advancing or retreating the grinding worktables 11A and 11B to and from the position corresponding to the grinding head 12 by subjecting the grinding worktables 11A and 11B to X-axis movement in the X-axis direction independently of each other. The respective grinding worktables 11A and 11B are alternately disposed to the position corresponding to the grinding head 12 by the advancing/retreating linear movement of each of the X-axis moving means 77A and 77B in the X-axis direction, and are adapted to undergo planar polar coordinate movement with respect to the grinding head 12 by the angularly controlled rotation in the direction E of the table base 40 at the position corresponding to the grinding head 12 and by the X-axis movement of the X-axis moving means 77A or 77B, and to retreat to the carrying-in and carrying-out position of the glass plate 2. Namely, the respective grinding worktables 11A and 11B are adapted to alternately suck the glass plate 2, advance to the grinding head 12, and effect polar coordinate controlled grinding with respect to the glass plate 2 in cooperation with the grinding head 12, while retreating from the grinding head 12 and being subjected to the carrying out and carrying in of the glass plate 2.

The grinding head 12 has a grinding wheel 79 for grinding the glass plate 2 by rotating and the spindle motor 56 having an output rotating shaft for rotating the grinding wheel 79, and, unlike the first embodiment, the grinding head 12 is fixedly erected uprightly on the base 3 in an inverted posture, i.e., with the grinding wheel 79 positioned on the upper side and the spindle motor 56 positioned on the lower side, i.e., is fixedly erected uprightly on the base 3 by means of a bracket 91 mounted on the base 3 and a vertical position adjusting means 92 provided on the bracket 91.

This glass-plate working apparatus 80 further has a spraying device 90 for spraying coolant water to the grinding wheel 79. The grinding wheel 79 is adapted to receive a spray of coolant water from the spraying device 90 at a grinding work position opposed to the grinding worktables 11A and 11B. When the grinding wheel 79 is opposed to the grinding worktable 11A in the X-axis direction, and the position of the grinding wheel 79 with respect to the glass plate 2 held on the grinding worktable 11A is in operation, the spraying device 90 sprays coolant water to this position, and spraying of coolant water to the position of the grinding wheel 79 on the grinding worktable 11B side is stopped. Meanwhile, when the grinding wheel 79 is opposed to the grinding worktable 11B in the X-axis direction, and the position of the grinding wheel 79 with respect to the glass plate 2 held on the grinding worktable 11B is in operation, coolant water is sprayed to this position, and spraying of coolant water to the position of the grinding wheel 79 on the grinding worktable 11A side is stopped.

Each of the X-axis moving means 77A and 77B of the grinding worktables 11A and 11B includes a pair of guide rails 83 juxtaposed on the base 3 along the X-axis direction; an X-axis moving base 85 which is installed on slide blocks 84 held on these guide rails 83; a feed screw 86 connected to the X-axis moving base 85 by means of a nut and mounted on the base 3 between the guide rails 83; and an X-axis control motor 89A or 89B coupled to the feed screw 86.

The grinding worktable 11A is adapted to be moved along the X-axis by the operation of the X-axis control motor 89A, while the grinding worktable 11B is adapted to be moved along the X-axis by the operation of the X-axis control motor 89B.

In the grinding worktables 11A and 11B, the grinding head 12, and the glass-plate transporting device 14 in the glass-plate working apparatus 80, when a newly cut-out glass plate 2 is produced in the scribing and bend-breaking section 8, first, in a state in which this newly cut-out glass plate 2 is being sucked and lifted by the suction pad 67 of the transporting shuttle 62A, the transporting shuttle 62A starts to move forwardly toward the grinding section 9. At this time, in the grinding section 9, the grinding worktable 11A is sucking the glass plate 2 and grinding is being performed with respect to peripheral edges of the glass plate 2 through the planar polar coordinate movement in cooperation with the grinding head 12, while, on the grinding worktable 11B, the ground glass plate 2 is being carried out to the discharge conveyor 13 by the transporting shuttle 62B which was returned to the glass-plate access area.

In this carrying-out state, the transporting shuttle 62A which sucked the cut-out glass plate 2, while being transferred, passes above the grinding wheel 79 in grinding operation and above the grinding worktable 11A in grinding operation, and reaches above the grinding worktable 11B which completed the carrying out of the glass plate 2. Thereupon, the transporting shuttle 62A lowers the suction pad 67 sucking the glass plate 2 and releases the suction to thereby carry in and place the cut-out glass plate 2 onto the grinding worktable 11B. After the carrying in and placing on the grinding worktable 11B, the transporting shuttle 62A proceeds to the operation of returning to the scribing and bend-breaking section 8, and the grinding worktable 11B, while the grinding worktable 11B concurrently sucks and fixes the received cut-out glass plate 2 by its suction cups 39, is moved in the X-axis direction, and advances toward the grinding head 12, and begins grinding in cooperation with the grinding head 12. The grinding worktable 11A, which was engaged in grinding operation earlier, is moved along the X-axis, and is returned to the glass-plate access area. By this time, the transporting shuttle 62B has already passed above the grinding wheel 79 in grinding operation and above the grinding worktable 11B in grinding operation, and has reached above the grinding worktable 11A to already begin the carrying out of the ground glass plate 2. By this time, the transporting shuttle 62A has sucked a new cut-out glass plate 2 and is transporting it toward the grinding worktable 11A. Thus, the grinding wheel 79 is adapted to continually grind the glass plates 2 which are alternately supplied by the grinding worktables 11A and 11B in the grinding work sections on upstream and downstream sides in the transporting direction D.

The glass-plate working apparatus 80 in accordance with this embodiment is comprised of the grinding head 12 and the two grinding worktables 11A and 11B which are arranged with the grinding head 12 interposed therebetween on forward and backward sides in the transporting direction D so as to undergo X-axis movement along the transporting direction D independently of each other and undergo angularly controlled rotation independently of each other. The two grinding worktables 11A and 11B are adapted to be alternately advanced to the position corresponding to the grinding head 12, and to undergo planar coordinate movement, i.e., in this embodiment, planar polar coordinate movement, with respect to the grinding head 12. Thus, the grinding head 12 is adapted to continue the grinding of the glass plates 2 on a continual basis as the operation is alternately repeated in which while grinding is being effected by the grinding head 12 through the planar polar coordinate movement of, for example, the grinding worktable 11A holding the glass plate 2 with respect to the grinding head 12, the grinding worktable 11B retreats from the position corresponding to the grinding head 12 and effects the carrying out of the already ground glass plate 2 and the receiving of the next glass plate 2 to be newly ground. In the glass-plate working apparatus 1 in accordance with this embodiment as well, since the grinding head 12 continues grinding alternately with respect to the glass plates 2 on the two worktables 11A and 11B and does not stop grinding, it is possible to obtain high productivity.

### DESCRIPTION OF REFERENCE NUMERALS

- 1:: glass-plate working apparatus
- 2:: glass plate
- 3:: base

## Claims

1. A glass-plate working apparatus (1, 80) comprising:
a grinding head (12) arranged in a transporting direction of a glass-plate (2); and
two grinding worktables (11A, 11B) being adapted so as to undergo X-axis movement along the transporting direction and undergo angularly controlled rotation independently of each other,
said two grinding worktables (11A, 11B) being adapted to be alternately advanced to a position corresponding to said grinding head (12), and to undergo planar polar coordinate movement with respect to said grinding head (12), and said grinding head (12) is adapted to continue the grinding of glass plates (2) on a continual basis as an operation is alternately repeated in which while grinding is being effected by said grinding head (12) through the planar polar coordinate movement of one of said grinding worktables (11A) holding the glass plate (2) with respect to said grinding head (12), another one of said grinding worktables (11B) retreats from the position corresponding to said grinding head (12) and effects the carrying out of an already ground glass plate (2) and the receiving of a next glass plate (2) to be newly ground,
**characterised in that** the grinding head (12) is arranged fixed in the transporting direction, and wherein either:
(a) said grinding head (12) is fixed to a side portion of a glass-plate transporting passage in a grinding section (9), said two grinding worktables (11A, 11B) including a table base (40); a main body unit (41) for subjecting the table base (40) to angularly controlled rotation; a Y-axis moving means (42) for subjecting the main body units (41) to Y-axis movement, and said two grinding worktables (11A, 11B) being adapted to be alternately advanced to the position corresponding to said grinding head (12), and to undergo planar polar coordinate movement with respect to said grinding head (12) by its angularly controlled rotation by the main body unit (41) and by the Y-axis movement by the Y-axis moving means (42), or
(b) said grinding head (12) is interposed between the two grinding worktables (11A, 11B) on forward and backward sides in the transporting direction, said glass-plate working apparatus (80) further comprising an X-axis moving means (77A, 77B) for subjecting the two grinding worktables (11A, 11B) to X-axis movement independently of each other, said two grinding worktables (11A, 11B) including a table base (40); and a main body unit (41) for subjecting the table base (40) to angularly controlled rotation, and said two grinding worktables (11A, 11B) being adapted to be alternately advanced to the position corresponding to said grinding head (12), and to undergo planar polar coordinate movement with respect to said grinding head (12) by its angularly controlled rotation by the main body unit (41) and by the X-axis movement by the X-axis moving means (77A, 77B).

## Patentansprüche

1. Glasplattenbearbeitungsvorrichtung (1, 80), die Folgendes umfasst:
einen Schleifkopf (12), der in einer Transportrichtung einer Glasplatte (2) angeordnet ist; und
zwei Schleifarbeitstische (11A, 11B), die dafür ausgelegt sind, eine X-Achsenbewegung entlang der Transportrichtung und eine winkelgesteuerte Drehung unabhängig voneinander auszuführen,
wobei die beiden Schleifarbeitstische (11A, 11B) dafür ausgelegt sind, abwechselnd in eine Position vorgerückt zu werden, die dem Schleifkopf (12) entspricht, und eine planare Polarkoordinatenbewegung in Bezug auf den Schleifkopf (12) auszuführen, und wobei der Schleifkopf (12) dafür ausgelegt ist, das Schleifen von Glasplatten (2) auf einer kontinuierlichen Basis fortzusetzen, während ein Vorgang abwechselnd wiederholt wird, bei dem, während des Schleifens durch den Schleifkopf (12) durch die planare Polarkoordinatenbewegung eines der Schleifarbeitstische (11A), der die Glasplatte (2) in Bezug auf den Schleifkopf (12) hält, ein anderer der Schleifarbeitstische (11B) sich aus der Position zurückzieht, die dem Schleifkopf (12) entspricht, und das Herausführen einer bereits geschliffenen Glasplatte (2) sowie die Aufnahme einer nächsten neu zu schleifenden Glasplatte (2) bewirkt, **dadurch gekennzeichnet, dass**
der Schleifkopf (12) in Transportrichtung feststehend angeordnet ist, und wobei entweder:
(a) der Schleifkopf (12) an einem Seitenteil eines Glasplattentransportweges in einem Schleifabschnitt (9) befestigt ist, wobei die beiden Schleifarbeitstische (11A, 11B) eine Tischbasis (40) umfassen; eine Hauptkörpereinheit (41) die Tischbasis (40) einer winkelgesteuerten Drehung unterzieht; ein Y-Achsenbewegungsmittel (42) die Hauptkörpereinheiten (41) einer Y-Achsenbewegung unterzieht, und die beiden Schleifarbeitstische (11A, 11B) dafür ausgelegt sind, abwechselnd in die Position vorgerückt zu werden, die dem Schleifkopf (12) entspricht, und eine planare Polarkoordinatenbewegung in Bezug auf den Schleifkopf (12) durch seine winkelgesteuerte Drehung durch die Hauptkörpereinheit (41) und durch die Y-Achsenbewegung durch das Y-Achsenbewegungsmittel (42) auszuführen, oder
(b) der Schleifkopf (12) zwischen den beiden Schleifarbeitstischen (11A, 11B) auf der vorderen und hinteren Seite in der Transportrichtung angeordnet ist, wobei die Glasplattenbearbeitungsvorrichtung (80) ferner ein X-Achsenbewegungsmittel (77A, 77B) aufweist, um die beiden Schleifarbeitstische (11A, 11B) unabhängig voneinander einer X-Achsenbewegung zu unterziehen, wobei die beiden Schleifarbeitstische (11A, 11B) eine Tischbasis (40) umfassen; und eine Hauptkörpereinheit (41) die Tischbasis (40) einer winkelgesteuerten Drehung unterzieht; und die beiden Schleifarbeitstische (11A, 11B) dafür ausgelegt sind, abwechselnd in die Position vorgerückt zu werden, die dem Schleifkopf (12) entspricht, und eine planare Polarkoordinatenbewegung in Bezug auf den Schleifkopf (12) durch seine winkelgesteuerte Drehung durch die Hauptkörpereinheit (41) und durch die X-Achsenbewegung durch das X-Achsenbewegungsmittel (77A, 77B) auszuführen.

## Revendications

1. Appareil de traitement de plaque de verre (1, 80) comprenant :
une tête de meulage (12) disposée dans une direction de transport d'une plaque de verre (2) ; et
deux tables de travail de meulage (11A, 11B) étant adaptées pour subir un mouvement d'axe X le long de la direction de transport et subir une rotation angulairement contrôlée indépendamment l'une de l'autre,
lesdites deux tables de travail de meulage (11A, 11B) étant adaptées pour être alternativement avancées à une position correspondant à ladite tête de meulage (12), et pour subir un mouvement de coordonnées polaires planes par rapport à ladite tête de meulage (12), et ladite tête de meulage (12) est adaptée pour continuer le meulage de plaque de verre (2) sur une base continue lorsqu'une opération est répétée en alternance dans laquelle tandis que le meulage est effectué par ladite tête de meulage (12) par le mouvement de coordonnées polaires planes de l'une desdites tables de travail de meulage (11A) maintenant la plaque de verre (2) par rapport à ladite tête de meulage (12), une autre desdites tables de travail de meulage (11B) recule de la position correspondant à ladite tête de meulage (12) et effectue l'exécution d'une plaque de verre déjà meulée (2) et la réception d'une plaque de verre suivante (2) à être nouvellement meulée,
**caractérisé en ce que** la tête de meulage (12) est disposée fixement dans la direction de transport, et dans lequel soit :
(a) ladite tête de meulage (12) est fixée à une partie latérale d'un passage de transport d'une plaque de verre dans une section de meulage (9), lesdites deux tables de meulage (11A, 11B) comprenant une base de table (40) ; une unité de corps principal (41) pour soumettre la base de table (40) à une rotation commandée angulairement ; un moyen de déplacement d'axe Y (42) pour soumettre les unités de corps principal (41) à un mouvement d'axe Y, et lesdites deux tables de travail de meulage (11A, 11B) étant adaptées pour être alternativement avancées à la position correspondant à ladite tête de meulage (12), et pour subir un mouvement de coordonnées polaires planes par rapport à ladite tête de meulage (12) par sa rotation commandée angulairement par l'unité de corps principal (41) et par le mouvement d'axe Y par le moyen de déplacement d'axe Y (42), ou
(b) ladite tête de meulage (12) est interposée entre les deux tables de travail de meulage (11A, 11B) sur les côtés avant et arrière dans la direction de transport, ledit appareil de traitement de plaque de verre (80) comprenant en outre un moyen de déplacement d'axe X (77A , 77B) pour soumettre les deux tables de travail de meulage (11A, 11B) à un mouvement d'axe X indépendamment l'une de l'autre, lesdites deux tables de travail de meulage (11A, 11B) comprenant une base de table (40) ; et une unité de corps principal (41) pour soumettre la base de table (40) à une rotation commandée angulairement, et lesdites deux tables de meulage (11A, 11B) étant adaptées pour être alternativement avancées à la position correspondant à ladite tête de meulage (12), et pour subir un mouvement de coordonnées polaires planes par rapport à ladite tête de meulage (12) par sa rotation commandée angulairement par l'unité de corps principal (41) et par le mouvement d'axe X par le moyen de déplacement d'axe X (77A, 77B).
